# EUROPEAN PATENT SPECIFICATION

(11) **EP 1 078 840 B1**
(45) Date of publication and mention of the grant of the patent: **26.10.2005**
(21) Application number: 00202893.4
(22) Date of filing: 18.08.2000
(51) Int. Cl.: B62B 7/06

(54) **Folding child cart**
Faltbarer Kinderwagen
Poussette pliable

(30) Priority: 20.08.1999 ES 9902254 U
(43) Date of publication of application: 28.02.2001
(73) Proprietor: PLAY, S.A., 08184 Palau de Plegamans (Barcelona) (ES)
(72) Inventor: Jane Stopp, Joaquim, 08184 Palau de Plegamans (ES)
(74) Representative: Ponti Sales, Adelaida

(56) References cited:
- EP-A- 0 885 797
- DE-U- 29 805 112
- US-A- 4 126 331
- US-A- 4 614 454
- US-A- 4 848 787
- US-A- 5 865 460

## Description

This invention relates to a foldable child pushchair, the folding of which can be carried out very conveniently from the handles.

Known in the state of the art are foldable child pushchairs which can be transported and stowed conveniently due to their adopting a folded position when they are not in use.

These currently known child pushchairs are made up of a structure of bars articulated together and a seat which is usually of textile material formed in the centre of said structure.

So that the child pushchair has a stable position when in use, it includes means for locking the articulations of the structure, which means are at a low height from the ground.

The main disadvantage presented by these child pushchairs is that folding them is very inconvenient, since said articulations have to be unlocked manually and directly at the articulations themselves at a height which is inconvenient, since the user has to bend down or carry out the unlocking using a foot. Closest prior art document US-A-4 848 787 discloses as featured in the preamble of independent claim 1 a foldable child pushchair, which includes a structure provided with wheels, means for locking the structure of the pushchair in unfolded position and manual means for unlocking the structure and allowing the pushchair to be folded, with said structure being made up of a number of articulated bars linked to each other, two of said bars defining two handles at their upper ends so that the user can guide the pushchair.

The child pushchair of the invention resolves said disadvantages, while presenting other advantages which will be described below.

The foldable child pushchair of the invention, which includes a structure provided with wheels, means for locking the structure of the pushchair in unfolded position and manual means for unlocking the structure and allowing the pushchair to be folded, with said structure being made up of a number of articulated bars linked to each other, two of said bars defining two handles at their upper ends so that the user can guide the pushchair, is characterised in that said manual means of unlocking are made up of a pair of pushbuttons fitted on said handles, which when operated unlock the articulations of the bars which form the structure of the pushchair.

Thanks to this feature it is possible to fold the child pushchair of the invention very easily and conveniently simply by acting upon the pushbuttons on the handles and pushing in a forward direction. This means that the unlocking is carried out using the hands, without any need to bend down or unlock using a foot.

This structure of the pushchair includes two side assemblies of articulated bars, with said assemblies being joined together by means of a number of similarly articulated bars, and with each of said assemblies of side bars being made up of an upper bar which defines the handle and by first and second lower bars provided with wheels at their lower part, the first lower bar being substantially aligned with the upper bar in the unfolded position of the child pushchair.

According to a preferred embodiment of the invention, said means for locking the structure in unfolded position include a movable body fitted close to the upper end of said first lower bar, said movable body including an orifice for housing the lower end of the upper bar, with said movable body being associated with elastic means which push it upwards and cause locking of the lower end of the upper bar in the interior of the orifice of the movable body.

According to said embodiment, said means of unlocking include a movable rod fitted inside said upper bar, said movable rod being associated with the pushbutton fitted onto the handle, in such a way that acting upon the pushbutton causes the rod to move, abutting in the orifice of the movable body and moving it against the action of the elastic means a sufficient distance for the lower end of the upper bar to be left outside said orifice, thus permitting folding of the structure of the pushchair.

Preferably, said movable rod is associated with said pushbutton by means of a lever with interposition of elastic means between the lever and the pushbutton.

According to a preferred embodiment, said orifice is a circular slot.

For a better understanding of all that has been described in this specification, some drawings are attached which, solely by way of example, show a practical case of embodiment of the foldable child pushchair of the invention.

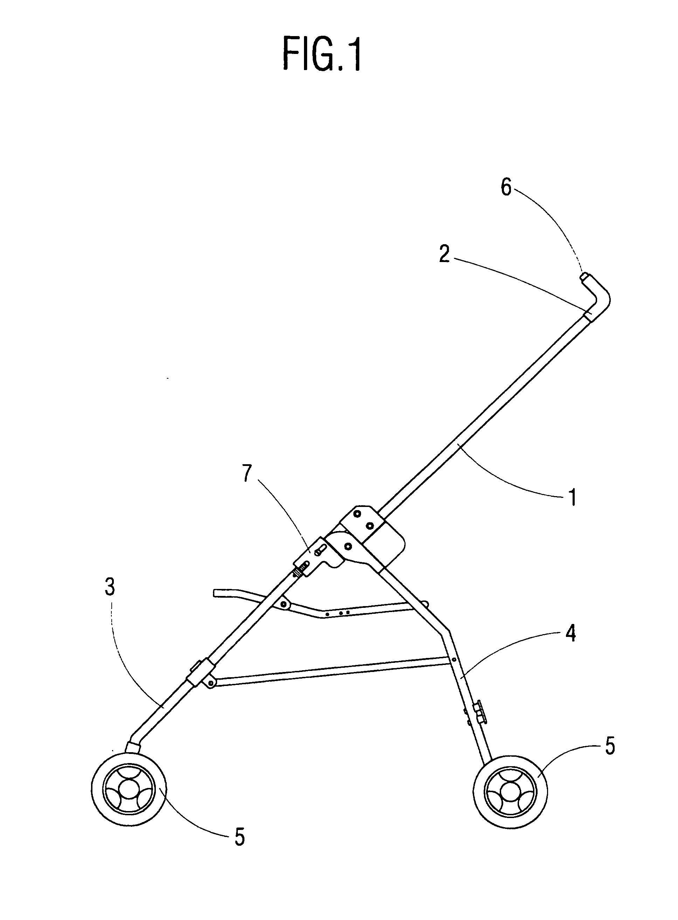

In said drawings, Figure 1 is a side elevation view of the structure of the foldable child pushchair of the invention;
Figure 2 is a side elevation view of the zone of articulation of the three bars which make up one of the side assemblies of the substructure, with the arms in the position they adopt when the child pushchair is unfolded;
Figure 3 is a side elevation view of one of the handles in cross-section in the position in which the pushbutton has not been pressed;
Figure 4 is a side elevation view of one of the handles in cross-section in the position in which the pushbutton has been pressed;

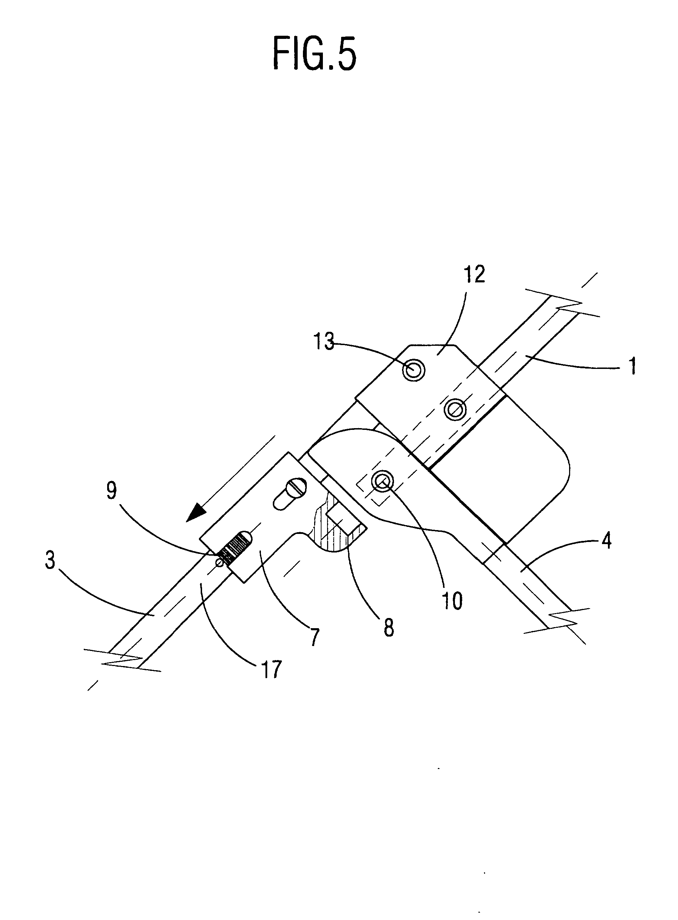

Figure 5 is a side elevation view of the zone of articulation of the three arms which make up one of the side assemblies of the structure, with the movable body in the position it adopts when the pushbuttons are pressed; and
Figure 6 is a side elevation view of the zone of articulation of the three arms which make up one of the side assemblies of the structure, with the arms in the position they adopt when the child pushchair is being folded.

As is known, the majority of foldable child pushchairs include a structure made up of two side assemblies of articulated bars, said assemblies being linked together by a number of bars which are also articulated.

One of these assemblies is shown in Figure 1, and is made up of an upper bar 1 which defines a handle 2 on its upper part, and by first and second lower bars 3, 4 provided with wheels 5 on their lower parts, with the first lower bar 3 being substantially in alignment with the upper bar 1 when the child pushchair is in unfolded position.

Said handles 2 include a pushbutton 6 for unlocking the articulations of the arms and allowing the pushchair to be folded, as will be described in detail below.

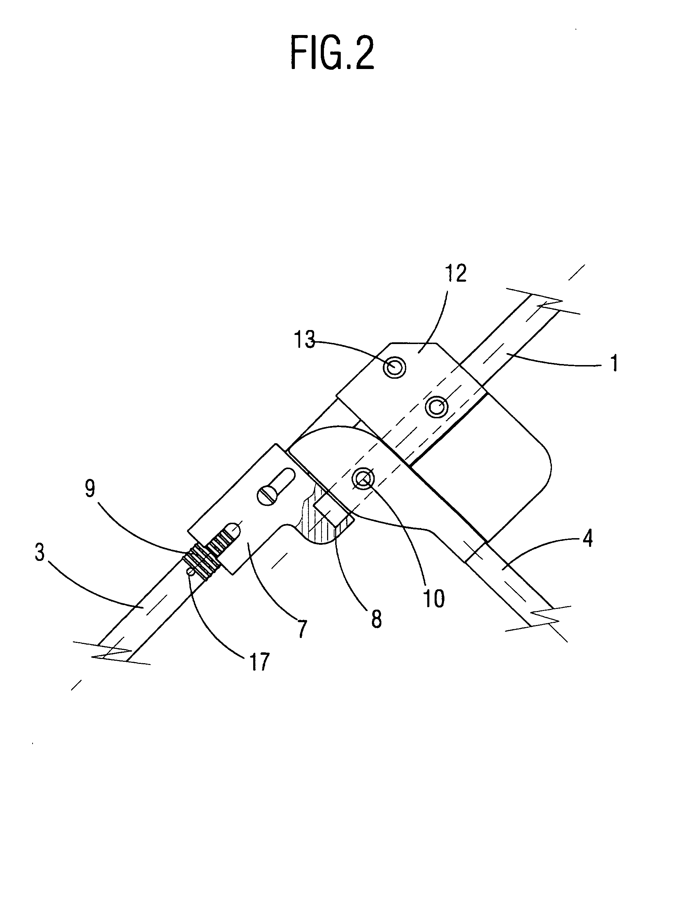

Figure 2 shows the arrangement of the bars making up one of the side assemblies in the unfolded position of the child pushchair of the invention.

These bars are locked by means of a movable body 7 fitted close to the upper end of the first lower bar 3. This movable body 7 includes an orifice 8, preferably a circular slot, for housing the lower end of the upper bar 1.

The movable body 7 has associated with it a spring 9 which pushes it upward, in such a way that the lower end of the upper bar 1 is left locked inside the orifice 8.

As can be seen from Figure 2, the upper bar 1 has a first articulation 10 with the second lower bar 4 and a second articulation 11 with an intermediate piece 12, which piece also has in its turn an articulation 13 with the first lower bar 3.

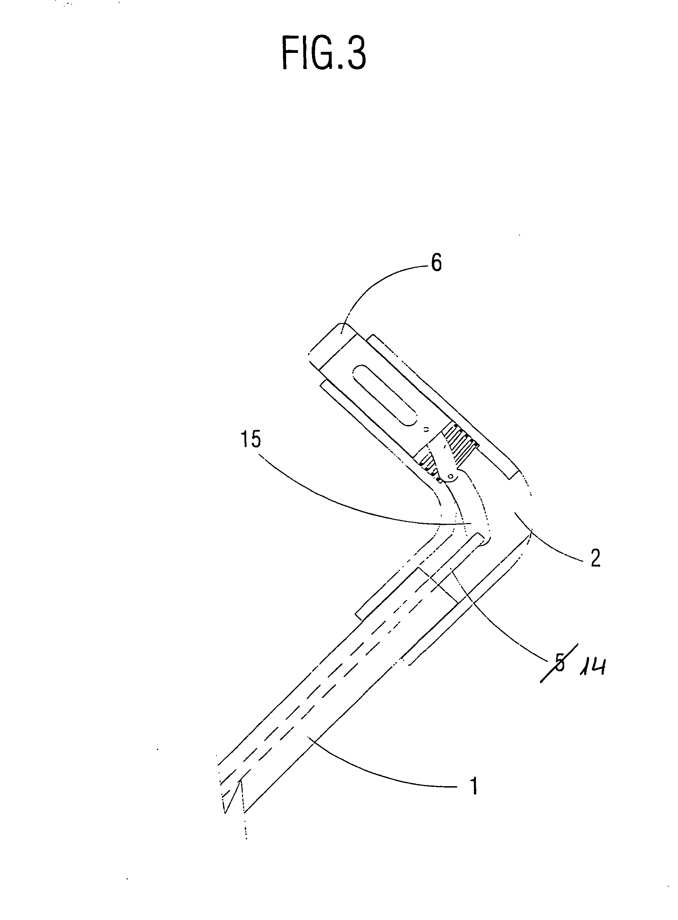

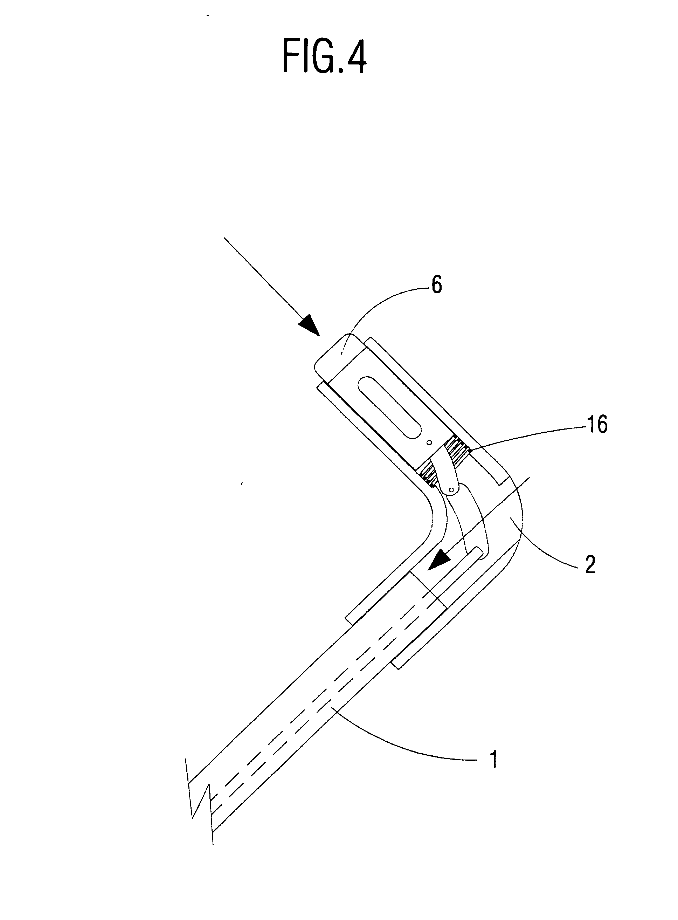

In order to unlock the bars in the position shown in Figure 2, the unlocking means shown in Figures 3 and 4 have to be acted upon. As can be seen from these figures, inside the upper bar there is a movable rod associated with the pushbutton 6 through a lever 15. Between said lever 15 and the pushbutton 6 a spring 16 is fitted for return of the pushbutton 6 to its original position when it is no longer being pressed.

Pressing on the pushbutton 6 causes the rod 14 to move downwards to abut against the internal surface of the orifice 8, or in the case of a circular slot with the surface which is enclosed by said slot, and leads to movement of the movable body 7 to its lower position against the action of the spring 9. This lower position will be defined by a stop 17, on which the spring 9 rests. This position will be a suitable one to permit the lower end of the upper bar 1 to lie outside said orifice 8, thus permitting folding of the child pushchair of the invention.

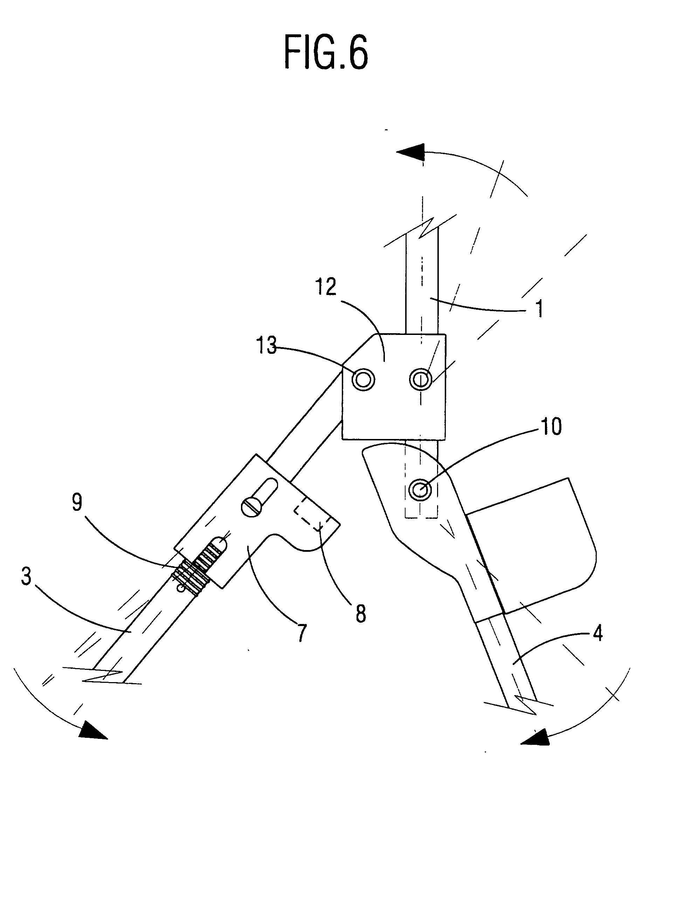

Once unlocking has been carried out, in order to fold the pushchair the two upper bars 1 have to be pushed forward at the same time. This simultaneous pushing of the two upper bars 1 will cause the bars to rotate in the direction of the arrows shown in Figure 6, leaving all the bars one on top of the others.

Although reference has been made to a specific embodiment of the invention, it will be clear to a person skilled in the art that the foldable child pushchair described could be subject to many changes and modifications, and that all the details mentioned could be replaced by others that are technically equivalent, without departing from the scope of protection defined by the attached claims.

## Claims

1. Foldable child pushchair, which includes a structure (1, 2, 3, 4) provided with wheels (5), means for locking the structure of the pushchair in unfolded position and manual means for unlocking the structure and allowing the pushchair to be folded, with said structure being made up of a number of articulated bars (1, 3, 4) linked to each other, two of said bars (1) defining two handles (2) at their upper ends so that the user can guide the pushchair, **characterised in that** said manual means of unlocking are made up of a pair of pushbuttons (6) fitted on said handles (2), which when operated unlock the articulations (10, 11, 13) of the bars (1, 3, 4) which form the structure of the pushchair.

2. Child pushchair as claimed in Claim 1, in which said structure of the pushchair includes two side assemblies of articulated bars, with said assemblies being joined together by means of a number of similarly articulated bars (1, 3, 4), and with each of said assemblies of side bars being made up of an upper bar (1) which defines the handle (2) and by first and second lower bars (3, 4) provided with wheels (5) at their lower part, the first lower bar (3) being substantially aligned with the upper bar (1) in the unfolded position of the child pushchair, **characterised in that** said means for locking the structure in unfolded position include a movable body (7) fitted close to the upper end of said first lower bar (3), said movable body (7) including an orifice (8) for housing the lower end of the upper bar (1), with said movable body (7) being associated with elastic means (9) which push said movable body upwards and cause locking of the lower end of the upper bar (1) in the interior of the orifice (8) of the movable body (7).

3. Child pushchair as claimed in Claims 1 and 2, **characterised in that** said means of unlocking include a movable rod (14) fitted inside said upper bar (1), said movable rod (14) being associated with the pushbutton (6) fitted onto the handle (2), in such a way that acting upon the pushbutton (6) causes the rod (14) to move, abutting in the orifice (8) of the movable body (7) and moving said movable body against the action of the elastic means (9) a sufficient distance for the lower end of the upper bar (1) to be left outside said orifice (8), thus permitting folding of the structure of the pushchair.

4. Child pushchair as claimed in Claim 3, **characterised in that** said movable rod (14) is associated with said pushbutton (6) by means of a lever (15) with interposition of elastic means (16) between the lever (15) and the pushbutton (6).

5. Child pushchair as claimed in Claim 2 or 3, **characterised in that** said orifice (8) is a circular slot.

## Patentansprüche

1. Faltbarer Kinderwagen mit einem Aufbau, der mit Rädern (5), einer Einrichtung zur Verriegelung des Aufbaus des Kinderwagens in der ungefalteten Stellung und Handhabungseinrichtungen zum Entriegeln des Aufbaus und zum Ermöglichen des Faltens des Kinderwagens versehen ist, wobei der Aufbau aus einer Zahl von Gelenkstangen (1, 3, 4) besteht, die miteinander verbunden sind, wobei zwei der Stangen (1) zwei Handhaben (zwei an ihren oberen Enden) derart bilden, dass der Benutzer den Kinderwagen führen kann, **dadurch gekennzeichnet, dass** die Handhabungseinrichtungen für das Entriegeln aus einem Paar Druckknöpfe (6) bestehen, die auf den Handhaben (2) sitzen, welche bei Betätigung die Gelenke (10, 11, 13) der Stangen (1, 3, 4) entriegeln, die den Aufbau des Kinderwagens bilden.

2. Kinderwagen nach Anspruch 1, bei dem der Aufbau des Kinderwagens zwei Seitenanordnungen von Gelenkstangen aufweist, wobei die Anordnungen miteinander mittels einer Zahl von ähnlichen Gelenkstangen (1, 3, 4) verbunden sind, und wobei jede der Anordnungen von Seitenstangen aus einer Oberstange (1), die die Handhabe (2) bildet, und durch erste und zweite untere Stangen (3, 4) besteht, die mit Rädern (5) an ihrem unteren Abschnitt versehen sind, wobei die erste untere Stange (3) im Wesentlichen mit der oberen Stange (11) in der ungefalteten Stellung des Kinderwagens fluchtet, **dadurch gekennzeichnet, dass** die Einrichtung zum Verriegeln des Aufbaus in der ungefalteten Stellung einen bewegbaren Körper (7) aufweist, der nahe zu dem oberen Ende der ersten unteren Stange (3) sitzt, wobei der bewegbare Körper (7) eine Öffnung (8) zur Unterlegung des unteren Endes der oberen Stange (1) aufweist, wobei dem bewegbaren Körper (7) eine elastische Einrichtung (9) zugeordnet ist, die den bewegbaren Körper aufwärts drückt und ein Verriegeln des unteren Endes der oberen Stange (1) in dem Inneren der Öffnung (8) des bewegbaren Körpers (7) verursacht.

3. Kinderwagen nach Anspruch 1 und 2, **dadurch gekennzeichnet, dass** die Einrichtung zum Entriegeln eine bewegbare Stange (14) aufweist, die in dem Inneren der oberen Stange (1) sitzt, wobei die bewegbare Stange (14) eine Zuordnung zu dem Druckknopf (6), der auf der Handhabe (2) sitzt, derart aufweist, dass ein Einwirken auf den Druckknopf (6) das Bewegen der Stange (14) verursacht, wobei sie in der Öffnung (8) des bewegbaren Körpers (7) anstößt und wobei sie den bewegbaren Körper gegen die Wirkung der elastischen Einrichtung (9) um eine ausreichende Entfernung von dem unteren Ende der oberen Stange (1) zum Verbleib außerhalb der unteren Öffnung (8) bewegt, wodurch ein Falten des Aufbaus des Kinderwagens ermöglicht wird.

4. Kinderwagen nach Anspruch 3, **dadurch gekennzeichnet, dass** die bewegbare Stange (14) dem Druckknopf (6) mittels eines Hebels (15) unter Zwischenschaltung einer elastischen Einrichtung (17) zwischen dem Hebel (15) und dem Druckknopf (6) zugeordnet ist.

5. Kinderwagen nach Anspruch 2 oder 3, **dadurch gekennzeichnet, dass** die Öffnung (8) ein zirkulärer Schlitz ist.

## Revendications

1. Poussette pour enfant pliante, qui comprend une structure (1, 2, 3, 4) munie de roues (5), des moyens pour bloquer la structure de la poussette en position dépliée et des moyens manuels pour débloquer la structure et permettre de plier la poussette, ladite structure étant constituée d'un certain nombre de barreaux articulés (1, 3, 4) liés les uns aux autres, deux desdits barreaux (1) définissant deux poignées (2) au niveau de leurs extrémités supérieures de façon à ce que l'utilisateur puisse guider la poussette, **caractérisée en ce que** lesdits moyens manuels de déblocage sont constitués d'une paire de boutons poussoirs (6) ajustés sur lesdites poignées (2), qui lorsqu'ils sont activés débloquent les articulations (10, 11, 13) des barreaux (1, 3, 4) qui forment la structure de la poussette.

2. Poussette pour enfant selon la revendication 1, dans laquelle ladite structure de la poussette comprend deux ensembles latéraux de barreaux articulés, lesdits ensembles étant joints au moyen d'un certain nombre de barreaux articulés similairement (1, 3, 4) et chacun desdits ensembles de barreaux latéraux étant constitué d'un barreau supérieur (1) qui définit la poignée (2) et de premier et second barreaux inférieurs (3, 4) munis de roues (5) au niveau de leur partie inférieure, le premier barreau inférieur (3) étant sensiblement aligné avec le barreau supérieur (1) dans la position dépliée de la poussette pour enfant, **caractérisée en ce que** lesdits moyens pour bloquer la structure dans la position dépliée comprennent un corps mobile (7) ajusté près de l'extrémité supérieure dudit premier barreau inférieur (3), ledit corps mobile (7) comprenant un orifice (8) pour loger l'extrémité inférieure du barreau supérieur (1), ledit corps mobile (7) étant associé à des moyens élastiques (9) qui poussent ledit corps mobile vers le haut et provoquent le blocage de l'extrémité inférieure du barreau supérieur (1) à l'intérieur de l'orifice (8) du corps mobile (7).

3. Poussette pour enfant selon les revendications 1 et 2, **caractérisée en ce que** lesdits moyens de déblocage comprennent une tige mobile (14) ajustée à l'intérieur dudit barreau supérieur (1), ladite tige mobile (14) étant associée au bouton poussoir (6) ajusté sur la poignée (2), de telle manière que l'activation du bouton poussoir (6) amène la tige (14) à se déplacer, venant en butée contre l'orifice (8) du corps mobile (7) et déplaçant ledit corps mobile à l'encontre de l'action des moyens élastiques (9), d'une distance suffisante pour que l'extrémité inférieure du barreau supérieur (1) reste à l'extérieur dudit orifice (8), permettant de cette manière de plier la structure de la poussette.

4. Poussette pour enfant selon la revendication 3, **caractérisée en ce que** ladite tige mobile (14) est associée audit bouton poussoir (6) au moyen d'un levier (15) moyennant l'interposition de moyens élastiques (16) entre le levier (15) et le bouton poussoir (6).

5. Poussette pour enfant selon la revendication 2 ou 3, **caractérisée en ce que** ledit orifice (8) est une fente circulaire.
